# EUROPÄISCHE PATENTANMELDUNG

(11) **EP 1 161 068 A2**
(43) Veröffentlichungstag der Anmeldung: **05.12.2001**
(21) Anmeldenummer: 01108409.2
(22) Anmeldetag: 03.04.2001
(51) Int. Cl.: H04M 3/42, H04L 12/46

(54) **Kommunikationsanlage und Verfahren für einen Verbindungsaufbau für Teleworking**

(30) Priorität: 16.05.2000 DE 10023868
(71) Anmelder: SIEMENS AKTIENGESELLSCHAFT, 80333 München (DE)
(72) Erfinder: Höfig, Jürgen, Dr., 44227 Dortmund (DE)

(57) **Zusammenfassung**

Infolge einer Eingabe einer speziellen Rufnummer an einem abgesetzten Kommunikationsendgerät (KE-A) wird ein Verbindungsaufbau zwischen dem abgesetzten Kommunikationsendgerät (KE-A) und der Kommunikationsanlage (PBX) initialisiert. Die zentrale Steuereinheit (CC) der Kommunikationsanlage (PBX) erkennt die spezielle Rufnummer und aktiviert daraufhin ein Rückrufmodul (M-RR) der Kommunikationsanlage (PBX) und bricht den Verbindungsaufbau ab. Nachfolgend wird automatisch ein neuer Verbindungsaufbau zwischen der Kommunikationsanlage (PBX) und dem abgesetzten Kommunikationsendgerät (KE-A) durch die zentrale Steuereinheit (CC) unter Zugriff auf das Rückrufmodul (M-RR) (PBX) initialisiert.

## Beschreibung

Die vorliegende Erfindung betrifft ein Verfahren für einen - insbesondere im Rahmen von 'Teleworking' erfolgenden - Verbindungsaufbau zwischen einer dezentralen und einer zentralen Kommunikationseinrichtung und eine entsprechend ausgestaltete Kommunikationsanlage gemäß dem Oberbegriff des Patentanspruchs 1 bzw. 9.

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen, ständig zu. Aus "Das virtuelle Büro" telcomreport, Heft 4, 1997, Siemens AG Berlin und München, ist bekannt, daß für ein effektives Erledigen der Aufgaben außerhalb des Unternehmens einerseits ein Zugriff auf die lokalen Datenressourcen des Unternehmens (in der Literatur auch mit 'remote LAN' bezeichnet) und andererseits ein Zugriff auf die im lokalen Kommunikationsnetz des Unternehmens angebotenen Kommunikations-Leistungsmerkmale (in der Literatur auch mit 'remote PBX' bezeichnet) unabhängig vom Aufenthaltsort des Mitarbeiters notwendig ist. Zu den Leistungsmerkmalen zählen die zusätzlich zu den standardmäßig in einem, z.B. ISDN-orientierten Kommunikationsnetz bereitgestellten Leistungsmerkmale, wie beispielsweise Einrichten einer Konferenzschaltung oder Signalisieren eines Nachrichteneingangs.

Eine Möglichkeit für einen Zugang eines Heimarbeiters - im folgenden als abgesetzter Teilnehmer bezeichnet - zum lokalen Kommunikationsnetz des Unternehmens ist ein teilnehmerseitig initialisierter Verbindungsaufbau zum Unternehmen. Die im Rahmen dieser Verbindung entstehenden Kosten werden jedoch dem abgesetzten Teilnehmer zugerechnet, so daß diesem in Abhängigkeit vom Aufenthaltsort unter anderem erhebliche Kosten entstehen. Alternativ ist es bekannt, zwischen dem abgesetzten Teilnehmer und dem lokalen Kommunikationsnetz eine für das Unternehmen kostenpflichtige Festverbindung einzurichten. Eine derartige Festverbindung stellt jedoch eine ineffektive Lösungsalternative dar, da die durch eine Festverbindung permanent zur Verfügung gestellte Übertragungskapazität in der Regel nur temporär vollständig ausgenutzt wird und dem Unternehmen somit in Zeitintervallen in denen die Übertragungskapazität nicht vollständig ausgenutzt wird unnötig Kosten entstehen.

Des weiteren ist aus der deutschen Offenlegungsschrift mit dem amtlichen Kennzeichen DE 198 17 494 A1 ein Verfahren für einen Verbindungsaufbau im Rahmen von Teleworking bekannt, bei dem ausgehend von einem abgesetzten Teilnehmer durch die Wahl einer speziellen Teleworking-Rufnummer eine Verbindungsaufbaumeldung an einen mit einer unternehmensinternen Kommunikationsanlage verbundenen anwendungsspezifischen Teleworking-Rechner übermittelt wird. Der Teleworking-Rechner leitet die Verbindungsaufbaumeldung an eine den Anschluß des Teleworking-Rechners an die Kommunikationsanlage realisierende Anschlußbaugruppe weiter. Wurde die dem abgesetzten Teilnehmer zugeordnete Rufnummer z.B. im Rahmen einer ISDN-Verbindung - im Rahmen des Leistungsmerkmals 'calling party number' - automatisch in der Verbindungsaufbaumeldung mitübermittelt, bricht die Anschlußbaugruppe den Verbindungsaufbau automatisch ab und initialisiert ihrerseits mittels der mitübermittelten Rufnummer einen Verbindungsaufbau zum abgesetzten Teilnehmer. Somit entstehen dem abgesetzten Teilnehmer für die aufzubauende Verbindung keine Kosten.

Ein Nachteil des beschriebenen Prinzips besteht darin, daß für eine Realisierung des Verfahrens zusätzliche Hardwarekomponenten - Teleworking-Rechner und Anschlußbaugruppe - für die Kommunikationsanlage benötigt werden, so daß die Implementierung des beschriebenen Verfahrens in bereits bestehende Systeme sowohl einen hohen konstruktiven als auch einen hohen steuerungstechnischen Aufwand bedingt.

Der vorliegenden Erfindung liegt daher die Aufgabe zugrunde, Maßnahmen vorzusehen, durch welches der Aufwand für die Implementierung eines derartigen Verfahrens reduziert werden kann.

Gelöst wird die Aufgabe ausgehend von den Merkmalen des Oberbegriffs des Patentanspruchs 1 bzw. 8 durch deren kennzeichnende Merkmale.

Ein wesentlicher Vorteil des erfindungsgemäßen Verfahrens bzw. der erfindungsgemäßen Kommunikationsanlage besteht darin, daß für eine Implementierung des Verfahrens keine zusätzlichen Hardwarekomponenten benötigt werden, da die für die Realisierung der Funktionen notwendigen Funktionseinheiten direkt in der zentralen Steuereinheit der Kommunikationsanlage integriert sind. Auf diese Weise wird zusätzlich das kommunikationsanlagen-interne Signalisierungsaufkommen reduziert, da eine Signalisierungsübermittlung zwischen der zentralen Steuereinheit und den Hardwarekomponenten - Teleworking-Rechner und Anschlußbaugruppe - gemäß dem Stand der Technik entfallen kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Übermittlung einer Kombination bestehend aus einer dem Teilnehmer zugeordneten kommunikationsanlagen-internen Rufnummer und einer teilnehmerindividuellen PIN (Personal Identification Number) eine eindeutige Identifizierung des den Verbindungsaufbau einleitenden abgesetzten Teilnehmers mittels bereits in der Kommunikationsanlage vorhandener Daten erfolgen und somit ein unauthorisierter Zugriff auf kommunikationsanlagen-interne Daten und Dienste auf einfache Weise unterbunden werden kann.

Ein weiterer Vorteil von in den Unteransprüchen definierten Ausgestaltungen der Erfindung besteht darin, daß ein Auslösen der gewünschten Rückruffunktion durch eine bestimmte funktionsspezifischen Tastenkombination veranlaßt wird, so daß das Verfahren durch die Definition von neuen funktionsspezifischen Tastenkombinationen auf einfache Weise für weitere Funktionen erweiterbar ist.

Ein Ausführungsbeispiel der Erfindung wird im folgenden anhand der Zeichnung näher erläutert.

Dabei zeigen:
- Fig. 1:: ein Strukturbild zur schematischen Darstellung der wesentlichen Funktionseinheiten einer erfindungsgemäßen Kommunikationsanlage; und
- Fig. 2:: ein Ablaufdiagramm zur Veranschaulichung der beim erfindungsgemäßen Verfahren ablaufenden wesentlichen Verfahrensschritte.

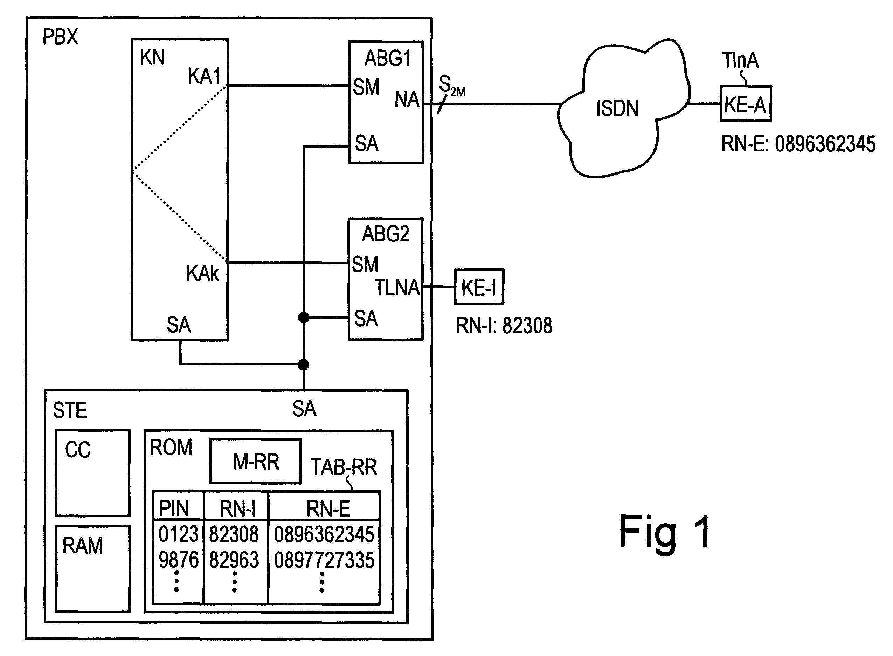

Fig. 1 zeigt ein Strukturbild mit den wesentlichen Funktionseinheiten der erfindungsgemäßen Kommunikationsanlage PBX. Die Kommunikationsanlage PBX weist Teilnehmer- bzw. Netzanschlußeinheiten - beispielhaft sind eine erste und eine zweite Anschlußeinheit ABG1, ABG2 dargestellt - zum Anschluß von Kommunikationsendgeräten bzw. -netzen an die Kommunikationsanlage PBX auf. Des weiteren beinhaltet die Kommunikationsanlage PBX ein mehrere bidirektionale, Zeitmultiplex-orientierte Koppel-Anschlüsse KA1, ..., KAk aufweisendes Koppelfeldmodul KN, wobei die Zeitmultiplex-orientierten Koppel-Anschlüsse KA1, ..., KAk als PCM-Anschlüsse (Puls Code Modulation) - auch als PCM-Highways, Speech-Highways oder S_{2M}-Anschlüsse bezeichnet - ausgestaltet sein können. Jeder PCM-Highway umfaßt im allgemeinen zum einen 30 Nutzkanäle, welche jeweils als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über die PCM-Anschlüsse KA1, ..., KAk ist das Koppelfeldmodul KN jeweils mit einem bidirektionalen, Zeitmultiplex-orientierten Anschluß SM der ersten und der zweiten Anschlußeinheit ABG1, ABG2 verbunden.

Des weiteren ist in der Kommunikationsanlage PBX eine die Funktionen der Kommunikationsanlage PBX steuernde Steuereinheit STE angeordnet. Hierzu weist die zentrale Steuereinheit einen zentralen Prozessor CC und Speichereinheiten RAM, ROM auf. Ein nicht-flüchtiger Speicher ROM dient dabei einerseits einer Speicherung von Programmodulen die durch den zentralen Prozessor CC abarbeitbar sind, wodurch eine Steuerung der Funktionen der Kommunikationsanlage PBX realisiert wird. Beispielsweise ist ein Rückrufmodul M-RR dargestellt. Unter Zugriff auf dieses Rückrufmodul M-RR erfolgt durch den zentralen Prozessor CC eine Steuerung der bei dem erfindungsgemäßen Verfahren zu realisierenden Funktionen. Andererseits dient der nicht-flüchtige Speicher ROM einer Speicherung von kommunikationsanlagen-internen Daten. Beispielsweise ist eine dem Rückrufmodul M-RR zugeordnete Tabelle TAB-RR dargestellt, die einer Speicherung von für die Rückruffunktion notwendigen Teilnehmerdaten dient. Die Teilnehmerdaten umfassen dabei eine teilnehmerindividuelle PIN, eine dem Teilnehmer zugeordnete kommunikationsanlagen-interne Rufnummer RN-I und eine kommunikationsanlagen-externe Rufnummer RN-E unter welcher der Teilnehmer in der Regel außerhalb des Unternehmens erreichbar ist. Ist dem Teilnehmer TlnA kein an der Kommunikationsanlage PBX angeschlossenes internes Kommunikationsendgerät KE-I zugeordnet, kann alternativ die kommunikationsanlagen-interne Rufnummer RN-I eines fiktiven Anschlußports - d.h. eines rein logisch vorhandenen, nur verwaltungstechnisch eingerichteten, keine Hardwarekomponenten aufweisenden Anschlußports - der Kommunikationsanlage PBX übermittelt werden. Somit besteht auch für Teilnehmer, die über keinen internen Teilnehmeranschluß verfügen die Möglichkeit auf kommunikationsanlagen-interne Daten und Dienste zuzugreifen. Eine flüchtige Speichereinheit RAM dient unter anderem einer Speicherung von temporären, bei der Abarbeitung eines Programmoduls, beispielsweise des Rückrufmoduls M-RR zwischenzuspeichernden Daten.

Über einen Steueranschluß SA ist die Steuereinheit STE mit einem Steuereingang SA des Koppelfeldmoduls KN mit Steueranschlüssen SA der ersten und der zweiten Anschlußeinheit ABG1, ABG2 verbunden. Eine Übermittlung von Steuerinformationen zwischen den Funktionseinheiten erfolgt dabei beispielsweise gemäß dem HDLC-Protokoll (High Level Data Link Control).

An einem Netzanschluß NA - beispielsweise einem bidirektionalen, Zeitmultiplex-orientierten S_{2M}-Anschluß - der ersten Anschlußeinheit ABG1 ist ein ISDN-orientiertes Kommunikationsnetz ISDN angeschlossen. An das ISDN-orientierte Kommunikationsnetz ISDN ist beispielhaft ein abgesetztes Kommunikationsendgerät KE-A angeschlossen. Dem abgesetzten Kommunikationsendgerät KE-A ist dabei im ISDN-Kommunikationsnetz die externe Rufnummer RN-E = 0896362345 zugeordnet. Des weiteren ist an einem Teilnehmeranschluß TLNA der zweiten Anschlußeinheit ABG2 der Kommunikationsanlage PBX beispielhaft ein internes Kommunikationsendgerät KE-I angeschlossen. Dem internen Kommunikationsendgerät KE-I ist dabei die kommunikationsanlagen-interne Rufnummer RN-I = 82308 zugeordnet.

Ein Anschluß des abgesetzten Kommunikationsendgerätes KE-A an das ISDN-orientierte Kommunikationsnetz ISDN bzw. des internen Kommunikationsendgerätes KE-I an die Kommunikationsanlage PBX erfolgt üblicherweise über S₀-Schnittstellen oder mittels daraus abgeleiteten Schnittstellen, wie beispielsweise Uₚ₀-Schnittstellen. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist.

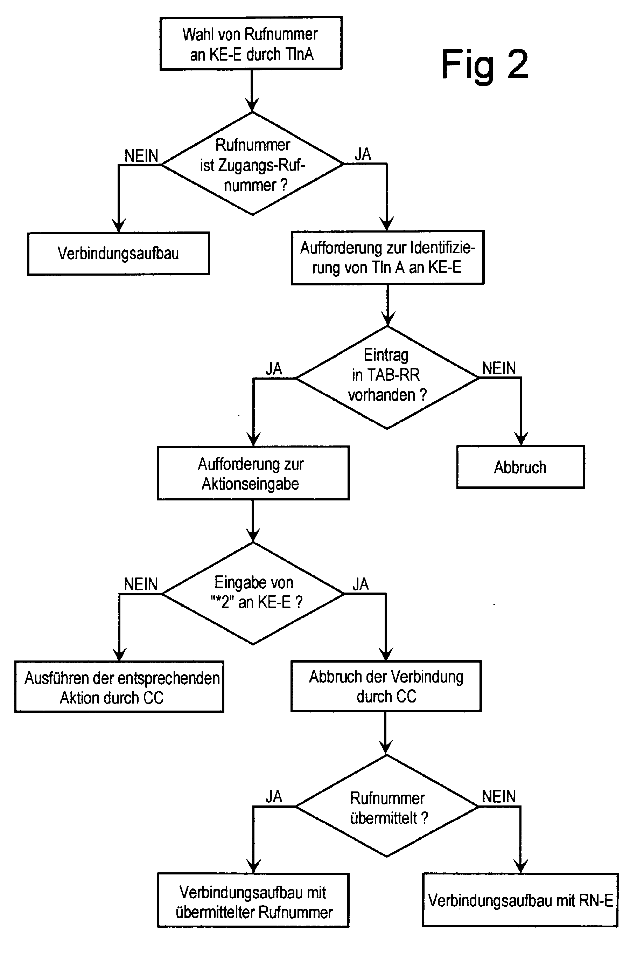

Fig. 2 zeigt ein Ablaufdiagramm zur Veranschaulichung der beim erfindungsgemäßen Verfahren ablaufenden wesentlichen Verfahrensschritte. Wird in einem ersten Schritt durch die Eingabe einer Rufnummer am abgesetzten Kommunikationsendgerät KE-A ein Verbindungsaufbau mit der Kommunikationsanlage PBX initialisiert, wird durch die zentrale Steuereinheit STE der Kommunikationsanlage PBX überprüft, ob die eingegebene Rufnummer eine spezielle Zugangsrufnummer der Kommunikationsanlage PBX ist. Ist dies nicht der Fall, wird ein Verbindungsaufbau mit einem durch die Rufnummer identifizierten Kommunikationsendgerät in herkömmlicher Weise eingerichtet.

Entspricht dagegen die am abgesetzten Kommunikationsendgerät KE-A eingegebene Rufnummer der speziellen Zugangsrufnummer der Kommunikationsanlage PBX wird von der zentralen Steuereinheit STE eine Aufforderung zur Identifizierung des das abgesetzte Kommunikationsendgerät KE-A nutzenden Teilnehmers Tln A an das abgesetzte Kommunikationsendgerät KE-A übermittelt. Die Aufforderung zur Identifizierung kann dabei durch eine von der Kommunikationsanlage PBX an das abgesetzte Kommunikationsendgerät KE-A übermittelte Sprachnachricht oder alternativ durch eine Übermittlung eines Anzeigetexts zur Anzeige an einem Display des abgesetzten Kommunikationsendgerätes KE-A erfolgen.

Eine Identifizierung des Teilnehmers TlnA erfolgt im vorliegenden Ausführungsbeispiel durch die Übermittlung einer Kombination bestehend aus der dem Teilnehmer zugeordneten kommunikationsanlagen-internen Rufnummer RN-I und der teilnehmerindividuellen PIN. Ist dem Teilnehmer TlnA im Unternehmen üblicherweise das interne Kommunikationsendgerät KE-I zugeordnet, würde der Teilnehmer TlnA die Kombination 823080123 für eine Identifizierung übermitteln. Eine Übermittlung von Informationen vom abgesetzten Kommunikationsendgerät KE-A kann beispielsweise in Form von DTMF-Signalen (Dual Tone Multi Frequency) erfolgen. Für die DTMF-Signale wird jeder Taste eines Endgeräts ein charakteristisches Signal zugeordnet, das bei Tastenbetätigung über das ISDN-Kommunikationsnetz ISDN an die Kommunikationsanlage PBX übermittelt wird. Ein DTMF-Signal unterscheidet sich in Frequenz und Signaldauer von den üblicherweise über eine Sprachverbindung zu übermittelten Daten, so daß die DTMF-Signale durch die zentrale Steuereinheit STE identifiziert und ausgewertet werden können. Alternativ kann eine Übermittlung von Informationen vom abgesetzten Kommunikationsendgerät KE-A zur Kommunikationsanlage PBX auch in Form von im Signalisierungskanal (D-Kanal) der ISDN-Verbindung übermittelten digitalen Steuerinformationen - in der Literatur als Keypads bezeichnet - erfolgen.

Ist dem Teilnehmer TlnA kein an der Kommunikationsanlage PBX angeschlossenes internes Kommunikationsendgerät KE-I zugeordnet, kann alternativ die kommunikationsanlagen-interne Rufnummer RN-I eines fiktiven Anschlußports - d.h. eines rein logisch vorhandenen, nur verwaltungstechnisch eingerichteten, keine Hardwarekomponenten aufweisenden Anschlußports - der Kommunikationsanlage PBX übermittelt werden. Somit besteht auch für Teilnehmer, die über keinen internen Teilnehmeranschluß verfügen die Möglichkeit auf kommunikationsanlagen-interne Daten und Dienste zuzugreifen.

Die vom Teilnehmer TlnA am abgesetzten Kommunikationsendgerät KE-A eingegebene Kombination wird in einem nächsten Schritt in der Kommunikationsanlage PBX mit den teilnehmerbezogenen Einträgen in der Tabelle TAB-RR verglichen. Ist kein der übermittelten Kombination entsprechender Eintrag in der Tabelle TAB-RR enthalten wird die gestartete Prozedur abgebrochen. Ist dagegen ein der übermittelten Kombination entsprechender Eintrag in der Tabelle TAB-RR enthalten wird der Teilnehmer TlnA in der Kommunikationsanlage PBX durch die zentrale Steuereinheit STE als berechtigt identifiziert. Daraufhin wird von der zentralen Steuereinheit STE eine Aufforderung zur Eingabe einer funktionsspezifischen, eine Funktion in der Kommunikationsanlage PBX auslösenden Tastenkombination an das abgesetzte Kommunikationsendgerät KE-A übermittelt. Im vorliegenden Ausführungsbeispiel ist der erfindungsgemäßen Rückruffunktion die funktionsspezifische Tastenkombination *2 zugeordnet. Die Aufforderung kann wiederum mittels einer entsprechenden Sprachnachricht oder eines entsprechenden Anzeigetexts realisiert werden.

Wird innerhalb einer vorgegebenen Zeitspanne keine Tastenkombination am abgesetzten Kommunikationsendgerät KE-A eingegeben, so wird die gestartete Prozedur abgebrochen. Wird jedoch innerhalb der vorgegebenen Zeitspanne eine - beispielsweise mittels DTMF-Tönen bzw. Keybads übertragene - Tastenkombination an der Kommunikationsanlage PBX empfangen, wird durch die zentrale Steuereinheit STE die der empfangenen Tastenkombination entsprechende Funktion ausgeführt. Wurde durch den Teilnehmer TlnA am abgesetzten Kommunikationsendgerät KE-A die, die Rückruffunktion identifizierende Tastenkombination *2 eingegeben, wird durch die zentrale Steuereinheit STE die zwischen dem abgesetzten Kommunikationsendgerät KE-A und der Kommunikationsanlage PBX bestehende Verbindung abgebaut. Je nach Art der zwischen dem abgesetzten Kommunikationsendgerät KE-A und der Kommunikationsanlage PBX bis zu diesem Zeitpunkt eingerichteten Verbindung - Nutzdatenverbindung über B-Kanal oder Signalisierungsverbindung über D-Kanal einer ISDN-Verbindung - entstehen für den Teilnehmer TlnA gar keine oder nur geringe Kosten.

In einem nächsten Schritt wird durch die zentrale Steuereinheit STE überprüft, ob im Rahmen der bisherigen Prozedur die dem abgesetzten Kommunikationsendgerät KE-A zugeordnete kommunikationsanlagen-externe Rufnummer RN-E an die Kommunikationsanlage PBX übermittelt wurde. Die kommunikationsanlagen-externe Rufnummer RN-E kann beispielsweise im Rahmen des Leistungsmerkmals 'calling party number' im Rahmen des Verbindungsaufbaus automatisch vom abgesetzten Kommunikationsendgerät KE-A an die Kommunikationsanlage PBX übermittelt worden sein. Alternativ kann die kommunikationsanlagen-externe Rufnummer RN-E manuell vom Teilnehmer TlnA zusammen mit der Tastenkombination *2 an die Kommunikationsanlage PBX übermittelt worden sein. Eine derart empfangene kommunikationsanlagen-externe Rufnummer RN-E wird in der flüchtigen Speichereinrichtung RAM zwischengespeichert und für einen nachfolgenden Verbindungsaufbau vom zentralen Prozessor CC ausgelesen. Wurde eine kommunikationsanlagen-externe Rufnummer RN-E an die Kommunikationsanlage PBX übermittelt, wird durch die zentrale Steuereinheit STE ein neuer Verbindungsaufbau mittels dieser übermittelten kommunikationsanlagen-externe Rufnummer RN-E zum abgesetzten Kommunikationsendgerät KE-A initialisiert.

Wurde dagegen keine kommunikationsanlagen-externe Rufnummer RN-E an die zentrale Steuereinheit STE übermittelt, wird davon ausgegangen, daß sich der Teilnehmer TlnA an dem für ihn standardmäßig voreingestellten Kommunikationsendgerät befindet und es wird durch die zentrale Steuereinheit STE ein neuer Verbindungsaufbau mittels der in der Tabelle TAB-RR gespeicherten, der übermittelten - aus der kommunikationsanlagen-internen Rufnummer RN-I und der PIN bestehenden - Kombination zugeordneten kommunikationsanlagen-externe Rufnummer RN-E initialisiert.

Nach dem Abbau der Verbindung durch die zentrale Steuereinheit STE wird ein Zeitglied gestartet und die Initialisierung des neuen Verbindungsaufbaus erst nach Ablauf dieses Zeitgliedes gestartet. Auf diese Weise ist sichergestellt, daß der Teilnehmer TlnA nach dem automatischen Abbau der Verbindung durch die zentrale Steuereinheit STE die Verbindung auch von Seiten des abgesetzten Kommunikationsendgerätes KE-A auslösen kann. Durch das Zeitglied wird somit vermieden, daß bei einem neuen Verbindungsaufbau eine Ablehnung der neuen Verbindung durch das abgesetzte Kommunikationsendgerät KE-A erfolgt, da der Teilnehmer TlnA die Verbindung nicht rechtzeitig auslösen konnte, d.h. beispielsweise den Hörer nicht rechtzeitig auflegen konnte.

Durch die Initialisierung des Verbindungsaufbaus ausgehend von der Kommunikationsanlage PBX werden dem Teilnehmer TlnA für eine nachfolgend aufgebaute Verbindung zwischen dem abgesetzten Kommunikationsendgerät KE-A und einem weiteren Kommunikationsendgerät keine weiteren Kosten berechnet.

## Patentansprüche

1. Verfahren für einen Verbindungsaufbau zwischen einer dezentralen (KE-A) und einer zentralen Kommunikationseinrichtung (PBX),
wobei durch die Eingabe einer speziellen Rufnummer an der dezentralen Kommunikationseinrichtung (KE-A) ein Verbindungsaufbau zwischen der dezentralen Kommunikationseinrichtung (KE-A) und der zentralen Kommunikationseinrichtung (PBX) initialisiert wird,
**dadurch gekennzeichnet,**
**daß** durch eine zentrale Steuereinheit (STE) der zentralen Kommunikationseinrichtung (PBX) ein Rückrufmodul (M-RR) der zentralen Kommunikationseinrichtung (PBX) aktiviert und der Verbindungsaufbau abgebrochen wird, und
**daß** automatisch ein neuer Verbindungsaufbau zwischen der zentralen Kommunikationseinrichtung (PBX) und der dezentralen Kommunikationseinrichtung (KE-A) durch die zentrale Steuereinheit (CC) unter Zugriff auf das Rückrufmodul (M-RR) initialisiert wird.

2. Verfahren nach Anspruch 1,
**dadurch gekennzeichnet,**
**daß** vor der Aktivierung des Rückrufmoduls (M-RR) eine Identifizierung eines die dezentrale Kommunikationseinrichtung (KE-A) nutzenden Teilnehmers (TlnA) erfolgt.

3. Verfahren nach Anspruch 2,
**dadurch gekennzeichnet,**
**daß** die Identifizierung des Teilnehmers (TlnA) anhand eines teilnehmerindividuellen Codewortes (PIN) und einer dem Teilnehmer in der zentralen Kommunikationseinrichtung (PBX) zugeordneten einrichtungs-internen Rufnummer (RN-I) erfolgt.

4. Verfahren nach einem der vorhergehenden Ansprüche,
**dadurch gekennzeichnet,**
**daß** der Verbindungsaufbaus zwischen der dezentralen Kommunikationseinrichtung (KE-A) und der zentralen Kommunikationseinrichtung (PBX) erst nach Eingabe einer speziellen Tastenkombination (*2) an der dezentralen Kommunikationseinrichtung (KE-A) abgebrochen wird.

5. Verfahren nach Anspruch 4,
**dadarch gekennzeichnet,**
daß der neue Verbindungsaufbau anhand einer im Rahmen des Verbindungsaufbaus automatisch von der dezentralen Kommunikationseinrichtung (KE-A) an die zentrale Kommunikationseinrichtung (PBX) übermittelten Rufnummer erfolgt.

6. Verfahren nach Anspruch 4,
**dadurch gekennzeichnet,**
**daß** der neue Verbindungsaufbau anhand einer zusammen mit der speziellen Tastenkombination (*2) an die zentralen Kommunikationseinrichtung (PBX) übermittelten Rufnummer erfolgt.

7. Verfahren nach Anspruch 4,
**dadurch gekennzeichnet,**
**daß** der neue Verbindungsaufbau anhand einer in einer Datenbasis (TAB-RR) der zentralen Kommunikationseinrichtung (PBX) gespeicherten Rufnummer (RN-E) erfolgt.

8. Verfahren nach einem der vorhergehenden Ansprüche,
**dadurch gekennzeichnet,**
**daß** nach dem Abbruch des Verbindungsaufbaus in der zentralen Kommunikationseinrichtung (PBX) ein Zeitglied gestartet wird, und daß der neue Verbindungsaufbau erst nach Ablauf des Zeitglieds initialisiert wird.

9. Kommunikationsanlage (PBX)
mit Anschlußeinheiten (ABG1, ABG2) zum Anschluß von Kommunikationsendgeräten (KE-I) und Kommunikationsnetzen (ISDN) an die Kommunikationsanlage (PBX),
mit einer zentralen Steuereinheit (STE) zur Steuerung der Funktionen der Kommunikationsanlage (PBX),
**dadurch gekennzeichnet,**
**daß** die zentrale Steuereinheit (STE) der Kommunikationsanlage (PBX) ein Rückrufmodul (M-RR) und eine Datenbasis (TAB-RR) aufweist, und
**daß** die zentrale Steuereinheit (STE) derart ausgestaltet ist, daß sie unter Zugriff auf das Rückrufmodul (M-RR) und die Datenbasis (TAB-RR) einen durch die Eingabe einer speziellen Rufnummer am abgesetzten Kommunikationsendgerät (KE-A) initialisierten Verbindungsaufbau zwischen dem abgesetzten Kommunikationsendgerät (KE-A) und der Kommunikationsanlage (PBX) abbricht und automatisch einen neuen Verbindungsaufbau durch die Kommunikationsanlage (PBX) initialisiert.
